(19)

Europäisches
Patentamt
European
Patent Office
Office européen
des brevets

(11) **EP 3 498 104 A1**

(12) **EUROPEAN PATENT APPLICATION**
published in accordance with Art. 153(4) EPC

(43) Date of publication:
**19.06.2019 Bulletin 2019/25**

(21) Application number: **17839543.0**

(22) Date of filing: **09.08.2017**

(51) Int Cl.:
**A23K 50/10** (2016.01)    **A23K 20/142** (2016.01)
**A23K 20/158** (2016.01)    **A23K 20/174** (2016.01)
**A23K 40/10** (2016.01)

(86) International application number:
**PCT/JP2017/028971**

(87) International publication number:
**WO 2018/030476 (15.02.2018 Gazette 2018/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **10.08.2016 JP 2016157711**

(71) Applicant: **Ajinomoto Co., Inc.**
**Tokyo 104-8315 (JP)**

(72) Inventors:
• **SHIBAHARA, Susumu**
  **Kawasaki-shi**
  **Kanagawa 210-8681 (JP)**
• **TANAKA, Masayuki**
  **Kawasaki-shi**
  **Kanagawa 210-8681 (JP)**
• **HARUNO, Atsushi**
  **Kawasaki-shi**
  **Kanagawa 210-8681 (JP)**

(74) Representative: **Strehl Schübel-Hopf & Partner**
**Maximilianstrasse 54**
**80538 München (DE)**

(54) **FEED ADDITIVE COMPOSITION FOR RUMINANTS AND METHOD FOR MANUFACTURING SAME**

(57)    An object of the present invention is to provide a method for producing a feed additive composition for ruminants that contains a biologically active substance with low water-solubility, is provided with high protection in rumen, and is superior in dissolution in the lower gastrointestinal tract.

The present invention relates to a method for producing a feed additive composition for ruminants having a particle size of not less than 0.5 mm and not more than 2 mm, including granulating in water a molten mixture containing (A) at least one selected from hydrogenated vegetable oil and hydrogenated animal oil each having a melting point of higher than 50°C and lower than 90°C, (B) lecithin, and (C) a biologically active substance having solubility of not less than 0.001 g and not more than 60 g in 100 g of water at 20°C.

Fig. 1

□ protection ratio (%)  ■ dissolution ratio

EP 3 498 104 A1

**Description**

[Technical Field]

The present invention relates to a feed additive composition for ruminants and a production method thereof. More particularly, the present invention relates to a feed additive composition for ruminants that contains a biologically active substance with low water-solubility, is provided with high protection in rumen, and is superior in dissolution in the lower gastrointestinal tract, and a production method thereof.

[Background Art]

The feed fed to the ruminants is digested and decomposed by the microorganism group in the first stomach (rumen), and digestive residue and the microorganism group are sent to the fourth stomach and thereafter and digested and absorbed in the intestine of the ruminants. For example, cellulose in the fiber is digested by microorganisms and fatty acid that can be used as energy source by the ruminants is produced.

On the other hand, even when a substance having a physiological activity is orally administered, it is difficult to make its physiological activity exhibited in the ruminant because the substance is digested by a microorganism group in the first stomach. Therefore, feed additive compositions have been developed that stably protect biologically active substances in the rumen of the ruminants and cause dissolution of the biologically active substances after the fourth stomach after passage through the rumen and absorption thereof in the gastrointestinal tract.

Patent document 1 discloses a method for melt-mixing methionine having a lower solubility than lysine hydrochloride, a high melting point fat or oil and a low melting point fat or oil, and cooling same in water for solidification, and describes in the Examples that the solid shows sustained-release in water.

Patent document 2 shows that lysine hydrochloride with high solubility in water is contained at a high concentration of 40 to 60%, and high rumen protection is afforded by melt-mixing fully hydrogenated vegetable oil, lecithin and lysine hydrochloride and forming a dispersion type preparation as granules in water. In addition, it is disclosed that the dissolution ratio of lysine hydrochloride into rumen is suppressed and rumen protection is enhanced by adding lecithin at a particular concentration.

As a method for producing a rumen protection preparation, a dispersion method (matrix type) has been reported which includes melting hydrogenated oil or fat as a protector at a high temperature, substantially uniformly dispersing the main agent therein, and solidifying the mixture as granules by cooling. In the dispersion method, since the main agent is added to the melted protector and the mixture is substantially uniformly mixed, the crystal particles of each single main agent granule are completely covered with the protector. Therefore, even a substance with high water solubility such as lysine hydrochloride can obtain sufficient rumen protection, and granules and pellets having a diameter of not less than 2 mm also have the property of dissolution in the lower gastrointestinal tract.

Non-patent document 1 reports that both rumen protection methionine preparation and rumen protected lysine preparation have an effect of improving milk yield when administered to dairy cattle; however, it describes that development of a rumen protection preparation by using lysine having higher solubility than methionine is challenging.

Patent document 1 above describes that when a rumen protection methionine preparation is produced with high melting point oil or fat alone, methionine is easily eluted in water and difficult to be contained at not less than 20%. Patent document 2 discloses that when lysine hydrochloride is used in place of methionine in the method described in patent document 1, rumen protection is low and lysine is eluted in the rumen. Thus, it is not easy to apply the same production method to biologically active substances having different properties.

[Document List]

[Patent documents]

    patent document 1: JP-B-49-45224
    patent document 2: JP-B-5040919

[non-patent document]

non-patent document 1: K. Watanabe et al., Animal Science Journal, 77, p495-502 (2006)

[SUMMARY OF THE INVENTION]

[Problems to be Solved by the Invention]

The present inventors have found that it is comparatively easy to avoid decomposition of the biologically active substance in the rumen with a protector or the like, namely, improve the protection in the rumen, when the biologically active substance has solubility of not less than 0.001 g and not more than 60 g in 100 g of water at 20°C, but it is difficult for such feed preparation to efficiently release the biologically active substance in the lower gastrointestinal tract such as the small intestine and the like.

The present invention has been made in view of the aforementioned situation, and the problem to be solved is provision of a method for producing a feed additive composition for ruminants, that contains a biologically active substance with low water-solubility, is provided with high protection in rumen, and is superior in dissolution in the lower gastrointestinal tract.

[Means of Solving the Problems]

The present inventors have conducted intensive studies of the above-mentioned problem and surprisingly found that a feed additive composition for ruminants that is provided with high protection in rumen, and is superior in dissolution in the lower gastrointestinal tract can be produced by granulating, in water, a molten mixture containing (A) at least one selected from hydrogenated vegetable oil and hydrogenated animal oil each having a melting point of higher than 50°C and lower than 90°C, (B) lecithin and (C) a biologically active substance having solubility of not less than 0.001 g and not more than 60 g in 100 g of water at 20°C, and making a particle size of the obtained granule to fall within a particular range. They have conducted further studies based on such finding and completed the present invention.

Accordingly, the present invention provides the following.

[1] A method for producing a feed additive composition for ruminants having a particle size of not less than 0.5 mm and not more than 2 mm, comprising granulating in water a molten mixture containing (A) at least one selected from hydrogenated vegetable oil and hydrogenated animal oil each having a melting point of higher than 50°C and lower than 90°C, (B) lecithin, and (C) a biologically active substance having solubility of not less than 0.001 g and not more than 60 g in 100 g of water at 20°C.

[2] The production method of [1], wherein the solubility of the biologically active substance in 100 g of water at 20°C is not less than 0.01 g and not more than 20 g.

[3] The production method of [1] or [2], wherein a content of the biologically active substance in the feed additive composition for ruminants is not less than 0.5 wt% and not more than 70 wt%.

[4] The production method of any one of [1] to [3], wherein a content of lecithin in the feed additive composition for ruminants is not less than 0.05 wt% and not more than 6 wt%.

[5] The production method of any one of [1] to [4], wherein the molten mixture is granulated in water by immersing the molten mixture in water.

[6] The production method of any one of [1] to [5], wherein the biologically active substance is at least one selected from the group consisting of amino acid and a salt thereof, and vitamin.

[7] The production method of any one of [1] to [6], comprising pulverizing the granule of the molten mixture.

[8] A feed additive composition for ruminants having a particle size of not less than 0.5 mm and not more than 2 mm, and composed of an underwater granule comprising (A) at least one selected from hydrogenated vegetable oil and hydrogenated animal oil each having a melting point of higher than 50°C and lower than 90°C, (B) lecithin, and (C) a biologically active substance having solubility of not less than 0.001 g and not more than 60 g in 100 g of water at 20°C.

[9] The composition of [8], wherein the solubility of the biologically active substance in 100 g of water at 20°C is not less than 0.01 g and not more than 20 g.

[10] The composition of [8] or [9], wherein a content of the biologically active substance in the feed additive composition for ruminants is not less than 0.5 wt% and not more than 70 wt%.

[11] The composition of any one of [8] to [10], wherein a content of lecithin in the feed additive composition for ruminants is not less than 0.05 wt% and not more than 6 wt%.

[12] The composition of any one of [8] to [11], wherein the biologically active substance is at least one selected from the group consisting of amino acid and a salt thereof, and vitamin.

[13] The composition of any one of [8] to [12], wherein the aforementioned underwater granule is a pulverized product of the underwater granule.

[Effect of the Invention]

According to the present invention, a method for producing a feed additive composition for ruminants, that contains a biologically active substance with low water-solubility, is provided with high protection in rumen, and is superior in dissolution in the lower gastrointestinal tract can be provided.

In the following, the protection of the feed additive composition for ruminants in the rumen is sometimes to be simply referred to as "protection", and the dissolution of the feed additive composition for ruminants in the lower gastrointestinal tract is sometimes to be simply referred to as "dissolution".

[Brief Description of the Drawings]

Fig. 1 is a graph showing the protection ratio and dissolution ratio of the compositions of Example 1 and Comparative Example 1.

Fig. 2 is a graph showing the protection ratio and dissolution ratio of the compositions of Example 2 and Comparative Example 2.

Fig. 3 is a graph showing the protection ratio and dissolution ratio of the compositions of Examples 3, 4 and Comparative Example 3.

Fig. 4 is a graph showing the protection ratio and dissolution ratio of the compositions of Examples 5, 6 and Comparative Example 4.

Fig. 5 is a graph showing the protection ratio and dissolution ratio of the compositions of Comparative Examples 5 - 8.

Fig. 6 is a graph showing the protection ratio and dissolution ratio of the compositions of Comparative Examples 9 - 11.

[Description of Embodiments]

In the production method of the feed additive composition for ruminants of the present invention (to be also referred to as "the production method of the present invention" in the following), one of the characteristics is that a molten mixture containing (A) at least one selected from hydrogenated vegetable oil and hydrogenated animal oil each having a melting point of higher than 50°C and lower than 90°C (to be also referred to as "Component A" in the following), (B) lecithin (to be also referred to as "Component B" in the following) and (C) a biologically active substance having solubility of not less than 0.001 g and not more than 60 g in 100 g of water at 20°C (to be also referred to as "Component A" in the following) is granulated in water.

In the present invention, the "feed additive composition for ruminants" generally refers to a composition added to a feed for ruminants and ingested when the ruminants ingest the feed. However, it may not necessarily be added to a feed as long as it is ingested by ruminants and, for example, the composition of the present invention may be singly ingested by ruminants.

Component A, Component B and Component C contained in the molten mixture used in the production method of the present invention are described in the following.

[Component A]

Hydrogenated vegetable oil and hydrogenated animal oil used as Component A are obtained by solidifying a vegetable oil or animal oil that is liquid at ordinary temperature (25°C) by adding hydrogen, and are a concept also including fully hydrogenated oil. The melting point of the hydrogenated vegetable oil and hydrogenated animal oil used in the present invention is generally higher than 50°C, and preferably not less than 55°C, more preferably not less than 60°C, since the protection in the rumen may be improved. The melting point is generally lower than 90°C, and preferably not more than 80°C, more preferably not more than 70°C, since the dissolution may be improved.

Specific examples of the hydrogenated vegetable oil include soybean hydrogenated oil, palm hydrogenated oil, rape seed hydrogenated oil, olive hydrogenated oil, almond hydrogenated oil, avocado hydrogenated oil, peanut hydrogenated oil, cottonseed hydrogenated oil, corn hydrogenated oil, safflower hydrogenated oil, sunflower hydrogenated oil, safflower hydrogenated oil, rice hydrogenated oil, candelilla wax, carnauba wax, rice wax, Japan wax, beeswax and the like, preferably soybean hydrogenated oil, palm hydrogenated oil, rape seed hydrogenated oil since they are industrially easily available. Specific examples of the hydrogenated animal oil include beef tallow hydrogenated oil, lard hydrogenated oil, whale wax and the like, preferably beef tallow hydrogenated oil, lard hydrogenated oil since they are industrially easily available. These hydrogenated vegetable oil and hydrogenated animal oil may be used singly, or two or more kinds thereof may be used in combination.

The content of Component A in the molten mixture is generally not less than 23 wt%, and preferably not less than 30 wt%, more preferably not less than 35 wt%, since the protection in the rumen may be improved. The content is generally not more than 60 wt%, and preferably not more than 55 wt%, more preferably not more than 50 wt%, since a high concentration of a biologically active substance can be contained in the molten mixture.

[Component B]

Lecithin used as Component B is considered to act as a surfactant, modify the surface of the biologically active substance and uniformly disperse the active substance in the molten protective agent without unevenly distributing the substance.

Specific examples of lecithin include plant-derived lecithins such as soybean lecithin, rape lecithin, rapeseed lecithin, sunflower lecithin, safflower lecithin, cottonseed lecithin, corn lecithin, linseed lecithin, sesame lecithin, olive lecithin, rice lecithin, coconut lecithin, palm lecithin and the like; egg-yolk lecithin and the like, preferably plant-derived lecithin, more preferably soybean lecithin, since they can suppress development of allergy as much as possible. These lecithins may be, for example, hydrogenated product, enzyme treatment product, enzyme decomposition product, lecithin fractionated product or the like. These lecithins may be used singly, or two or more kinds thereof may be used in combination.

The content of Component B in the molten mixture is generally not less than 0.05 wt%, and preferably not less than 0.5 wt%, more preferably not less than 1 wt%, since the protection in the rumen may be improved. The content is generally not more than 6 wt%, and preferably not more than 5 wt%, more preferably not more than 3 wt%, particularly preferably not more than 2 wt%, since the protection in the rumen may be improved.

[Component C]

The biologically active substance used as Component C refers to a substance capable of exhibiting a physiologically active function in vivo when ingested by ruminants. For example, amino acid and a salt thereof, vitamin, enzyme, protein, peptide, fatty acid, nucleic acid, steroid and the like can be mentioned.

Component C preferably has a particular range of solubility in 100 g of water at 20°C. According to the present invention, a production method of a feed additive composition for ruminants provided with high protection in rumen and superior in dissolution in the lower gastrointestinal tract can be provided even when a biologically active substance with low water-solubility and a particular range of solubility in 100 g of water at 20°C is used.

Specifically, the solubility of Component C in 100 g of water at 20°C is preferably not less than 0.001 g, more preferably not less than 0.005 g, particularly preferably not less than 0.01 g. The solubility is preferably not more than 60 g, more preferably not more than 20 g.

Specific examples of Component C include amino acids such as histidine, valine, methionine, leucine, isoleucine, phenylalanine, tryptophan, cysteine, arginine, asparagine, aspartic acid, ornithine, cystine, citrulline, threonine, serine, tyrosine, hydroxytryptophan and the like or a salt thereof; vitamins such as vitamin $B_{12}$ (cyanocobalamin), folic acid, niacin, thiamin, riboflavin, pantothenic acid, biotin and the like (preferably, water-soluble vitamin); xanthine, guanine and the like. These Components C may be used singly, or two or more kinds thereof may be used in combination.

Any of L-form, D-form and DL-form of amino acid can be used.

The salt of amino acid is preferably a physiologically acceptable salt and, for example, salts with inorganic bases, salts with inorganic acids and salts with organic acids and the like can be mentioned. Examples of the salt with inorganic base include salts with alkali metals such as sodium, potassium, lithium and the like, salts with alkaline earth metals such as calcium, magnesium and the like, ammonium salt and the like. Examples of the salt with inorganic acid include salts with hydrohalic acid (hydrochloric acid, hydrobromic acid, hydroiodic acid etc.), sulfuric acid, nitric acid, phosphoric acid and the like. Examples of the salt with organic acid include salts with formic acid, acetic acid, propionic acid, oxalic acid, succinic acid, maleic acid, fumaric acid, citric acid and the like.

As Component C, any of those obtained by extraction and purification from naturally occurring animals, plants and the like, or those obtained by chemical synthesis method, fermentation method, enzymatic method or gene recombination method may be used. Alternatively, a commercially available product may be used as it is or after pulverizing.

The content of Component C in the molten mixture is generally not less than 40 wt%, and preferably not less than 45 wt%, more preferably not less than 50 wt% to achieve high concentration of Component C in the molten mixture. The content is generally not more than 70 wt%.

The molten mixture used in the production method of the present invention may contain, besides Components A - C, other component other than those. Such other component is not particularly limited as long as the object of the present invention is not impaired. For example, excipients such as calcium carbonate, silicon dioxide and the like; lubricants such as magnesium stearate, calcium stearate, talc and the like; pH adjusters such as sodium hydrogen carbonate, citric acid and the like; anticaking agents such as calcium silicate, sodium aluminosilicate and the like; and the like can be mentioned. Such other component may be used singly, or two or more kinds thereof may be used in combination.

A preparation method of the molten mixture containing Components A - C is not particularly limited and, for example, a method including heating Components A - C (optionally containing other component when desired) using a commercially available extruder (preferably, twin screw extruder) and the like, and the like can be mentioned. The order of addition of Components A - C to a cylinder of the extruder is not particularly limited. To coat the surface of Component C with Component B, the Components B and C may be mixed with a mixer or the like before addition, or Components A to C may be added almost simultaneously to increase production efficiency. Alternatively, the molten mixture can also be obtained by mixing Components A and C in advance at around room temperature, adding the remaining components and heating the mixture. Component C may be pulverized before use. For example, Component C may be used after pulverizing with a pulverizer to an average particle size (median size) of preferably not more than 150 $\mu$m, more preferably not more than 75 $\mu$m, and sieving as necessary.

The temperature at which Components A - C are heated is not particularly limited as long as it is not less than the melting point of Component A. It is preferably about 5 to 15°C higher than the melting point of Component A. For example, when soybean fully hydrogenated oil (melting point: 67 - 68°C) is used as Component A, it is heated at 72 - 85°C. In this case, the component other than Component A is not necessarily melted and, for example, Component C may be dispersed without melting and the molten mixture may be in a slurry state. It is not necessary to heat at a temperature not less than the melting point of Component A from the beginning of heating. A stable molten mixture is obtained efficiently by, for example, first preheating materials at a temperature 5 - 10°C lower than the melting point of Component A, then conveying the materials by a screw in the cylinder of the extruder, and then heating them at a predetermined temperature not less than the melting point of Component A.

The instrument that can be utilized for preparing the molten mixture is not limited to the extruder, and any instrument may be used appropriately as long as it can prepare a molten mixture that can become a droplet when dropped naturally.

A method for granulating the molten mixture containing Components A - C in water is not particularly limited. Granulation can be performed by immersing the molten mixture in water, specifically, for example, by retaining the molten mixture in a container having a hole (pore) with a predetermined diameter and dropping the molten mixture into water from the hole, and the like. When the molten mixture is dropped (preferably, free fall) from the hole with a predetermined diameter, it is cleaved by the action of surface tension during dropping to become respectively independent droplets. When the droplet is dropped into a water tank at a given temperature, the droplet is instantaneously cooled in water to solidification and a solid (granule) with a given shape is obtained. When the droplet solidifies into solid, the water in the water tank is taken into the solid. This water can be decreased by a heat-drying treatment (described later). When the molten mixture is immersed in water, a part of the biologically active substance may be eluted in water; however, the amount thereof is extremely small.

The diameter of the hole in the container retaining the molten mixture may be appropriately selected according to the size of the obtained granule (solidified droplet of the molten mixture) and the like and it is generally 0.1 - 5 mm, preferably 0.5 - 3 mm.

While the container retaining the molten mixture is not particularly limited as long as it has a hole with a predetermined diameter, a multi-hole shooter is preferably used since it can efficiently increase the production amount. Here, the "multi-hole shooter" refers to a container having a plurality (e.g., 2 - 10000) of perforations in the bottom and a facility for temporarily retaining the molten mixture. The container for retaining the molten mixture is preferably provided with a heat facility to prevent cooling of the molten mixture to be retained.

The drop distance (e.g., distance from the bottom surface of the multi-hole shooter to water surface) of the molten mixture is not particularly limited and it is generally 10 mm - 1.5 m, preferably 30 mm - 1.0 m. The shape of the obtained granule (solid) can be changed by adjusting the drop distance of the molten mixture. For example, when a molten mixture heated to about 65°C is dropped into water, a drop distance of 50 - 150 mm affords a granule with a spherical shape to a rugby ball-like shape. A longer drop distance leads to a large impact energy with the water surface, and a granule with a shape of flattened pressed barley is obtained. For example, when the drop distance is about 0.5 m, a granule with a shape of pressed barley with an undulating fringe is obtained.

The temperature of the molten mixture when dropped into water is not particularly limited and is generally 65 - 90°C, and preferably 70 - 80°C in view of the melting point.

The temperature of water into which the molten mixture is dropped is not particularly limited as long as the molten mixture is instantaneously solidified, and is generally 0 - 30°C. The water temperature is preferably maintained constant. For example, the temperature of water into which the molten mixture is dropped can be maintained constant by continuous supplementation of water at a predetermined temperature and the like.

A method for collecting a mixture (granule) solidified in water is not particularly limited. When water temperature is to be maintained constant by continuously supplementing water, the solidified mixture (specific gravity: about 1.1) may be collected using a net, a net container or the like.

The granule obtained by solidifying the molten mixture containing Components A - C in water (to be also referred to as "underwater granule" in the present specification) is preferably subjected to a heat-drying treatment. The water content of the granule can be adjusted by the heat-drying treatment. The heat-drying treatment can be performed, for example, by exposing the granule to an atmosphere (e.g., hot water, vapor, hot air etc.) set to a temperature lower than the melting point of Component A contained in the granule for generally several minutes to several tens of minutes, and the like. The time of the heat-drying treatment may be appropriately set based on the temperature of the heat-drying treatment, the kind of Component A, the amount of the granule and the like. For example, the granule may be exposed to an atmosphere set to a temperature lower than the melting point of Component A contained in the granule for a long time (e.g., 0.5 - 24 hr and the like).

The feed additive composition for ruminants of the present invention (hereinafter to be also referred to as "the composition of the present invention") preferably has a particle size within a particular range. In the present invention, the particle size of the granule obtained by solidifying a molten mixture containing Components A - C in water (i.e., underwater granule) is appropriately adjusted, and this is used as the feed additive composition for ruminants of the present invention. The composition of the present invention having a particle size within a particular range contains, as shown in the below-mentioned Examples, a biologically active substance having low water-solubility and a solubility within a particular range in 100 g of water at 20°C, is provided with high protection in rumen, and is superior in dissolution in the lower gastrointestinal tract.

To be specific, the particle size of the composition of the present invention is not less than 0.5 mm and not more than 2 mm.

In addition, a method for adjusting the particle size is not particularly limited. For example, a method for decreasing the hole in the container retaining the molten mixture, a method including pulverization and sieve analysis of compositions having a particle size not less than the above-mentioned preferable particle size can be mentioned.

The particle size of the composition of the present invention is defined by sieve analysis using the standard sieve defined in JIS Z 8801 of Japanese Industrial Standards.

The particle size of the composition of the present invention can be adjusted by a method known per se and is not particularly limited. For example, adjustment can be performed by pulverizing the granule obtained by solidifying a molten mixture containing Components A - C in water (i.e., underwater granule) and subjecting same to sieve analysis and the like. Granules can be pulverized using, for example, cutter mill, roll mill, pin mill, jaw crusher, dry granulator and the like. The particle size of the composition of the present invention can be adjusted by a method such as sieve analysis using the standard sieve defined in JIS Z 8801 of Japanese Industrial Standards and the like.

When the particle size of the granule obtained by solidifying a molten mixture containing Components A - C in water (i.e., underwater granule) is within the above-mentioned particular range from the start, the granule can be used as it is as the composition of the present invention.

The composition of the present invention contains Components A - C. The content of Component A in the composition of the present invention is generally exceeds 23 wt%, and preferably not less than 30 wt%, more preferably not less than 35 wt%, since the protection in the rumen may be improved. The content is generally less than 60 wt%, and preferably not more than 55 wt%, more preferably not more than 50 wt%, since a high concentration of a biologically active substance can be contained.

The content of Component B in the composition of the present invention is generally not less than 0.05 wt%, and preferably not less than 0.5 wt%, more preferably not less than 1 wt%, since the protection in the rumen may be improved. The content is generally not more than 6 wt%, and preferably not more than 5 wt%, more preferably not more than 3 wt%, particularly preferably not more than 2 wt%, since the protection in the rumen may be improved.

The content of Component C in the composition of the present invention is generally not less than 40 wt%, and preferably not less than 45 wt%, more preferably not less than 50 wt% since it can be contained at a high concentration in the composition. The content is generally not more than 70 wt%.

The composition of the present invention may contain, besides Components A - C, other component other than those. Such other component is not particularly limited as long as the object of the present invention is not impaired. For example, those similar to the components that can be contained in the molten mixture used in the method of the present invention can be mentioned.

The composition of the present invention is desirably of a dispersion type (matrix type). Here, the "dispersion type" composition refers to a composition in which each component is substantially uniformly dispersed. To be specific, for example, a rumen protection preparation obtained by a production method including melting hydrogenated oil or fat as a protector at a high temperature, substantially uniformly dispersing the main agent (biologically active substance) therein, and solidifying the mixture as granules by cooling and the like.

The protection in the rumen and dissolution in the gastrointestinal tract of the composition of the present invention can be evaluated from the protection ratio and dissolution ratio of the biologically active substance which are measured by an in vitro test using a dissolution tester.

Using a dissolution tester (manufactured by TOYAMA SANGYO CO., LTD.), a preparation sample (about 3 g) is placed in ultrapure water (900 ml) (produced using Milli Q (manufactured by Millipore)) heated to a temperature (e.g., 39°C) corresponding to the body temperature of ruminants (e.g., dairy cattle etc.), and the mixture is stirred at 100 rpm. At 20 hr from the start of stirring, 2 ml of the stirring test solution is collected for protection ratio measurement, and the concentration of the biologically active substance is measured (concentration A, unit: mg/dl).

<measurement of concentration (concentration B) of biologically active substance for calculation of dissolution ratio>

To the test solution immediately after collection of the above-mentioned sample for protection ratio measurement is added with stirring at 100 rpm an aqueous solution (8 ml) of a bile powder (manufactured by Wako Pure Chemical Industries, Ltd.) and pancreatin (manufactured by Wako Pure Chemical Industries, Ltd.) (concentration of bile powder and pancreatin is 23.4 g/100 ml for each) to give a small intestine-corresponding test solution. At 5 hr from the addition of the aqueous solution, 2 ml of the stirring test solution is collected for dissolution ratio measurement, and the concentration of the biologically active substance is measured (concentration B, unit: mg/dl).
The concentration of the above-mentioned biologically active substance (concentrations A and B) is measured by liquid chromatography (manufactured by Waters). When the biologically active substance is lysine, it is measured by a biosensor (manufactured by Oji Scientific Instruments).

<calculation of protection ratio and dissolution ratio of biologically active substance>

The protection ratio and dissolution ratio of biologically active substance are calculated by the following formulas.

```
protection ratio [%]={1-(concentration A[mg/dl]×9)/(preparation
sample weight [g]×1000×content of biologically active substance
in preparation sample [wt%]/100)}×100
```

```
dissolution ratio [%]={((concentration B[mg/dl]-concentration
A[mg/dl])×9)/(preparation sample weight [g]×1000×content of
biologically active substance in preparation sample
[wt%]/100)}×100
```

The protection ratio of the biologically active substance by the composition of the present invention is preferably not less than 50%, more preferably not less than 70%, particularly preferably not less than 80%. On the other hand, the upper limit of the protection ratio of the composition of the present invention is not particularly limited and is generally 100%.
A higher dissolution ratio of the biologically active substance in the composition of the present invention is more preferable, and the upper limit thereof is not particularly limited.
When the particle size alone of the composition of the present invention is changed without changing the composition thereof, a smaller particle size leads to a higher dissolution ratio of the biologically active substance. For example, the composition of the present invention shows a higher dissolution ratio of the biologically active substance than a feed composition having the same composition and a particle size exceeding 2 mm. In addition, the composition of the present invention having a particle size of not less than 0.5 mm and not more than 1 mm shows a higher dissolution ratio of the biologically active substance than the composition of the present invention having the same composition and a particle size exceeding 1 mm and not more than 2 mm.
When, for example, the solubility of the biologically active substance in water is low, or when the solubility in 100 g of water at 20°C is not less than 0.001 g and not more than 60 g, a comparison of the dissolution ratio of the biologically active substance between the composition of the present invention and a feed composition having the same composition and a particle size exceeding 2 mm reveals that the latter may show a dissolution ratio of 0% but the former having a particle size of not less than 0.5 and not more than 2 mm shows a higher dissolution ratio compared to the latter having a particle size exceeding 2 mm. On the other hand, when the solubility of the biologically active substance in water is high, a smaller particle size does not necessarily mean a higher dissolution ratio of the biologically active substance, but rather, the dissolution ratio may be even lower.

The ruminants for which the composition of the present invention is used are not particularly limited. For example, bovine, sheep, goat, deer, giraffe, camel and llama and the like can be mentioned.

The amount of the composition of the present invention to be added to a feed for ruminants is not particularly limited, and can be appropriately adjusted according to the necessary amount of the biologically active substance and the like. The composition of the present invention is generally added to a feed and used together with the feed to be ingested by the ruminants. However, as long as the composition is ingested by the ruminants, it may not necessarily be added to a feed. For example, the composition of the present invention can be singly ingested by the ruminants.

The present invention is explained more specifically in the following Examples, but the present invention is not limited at all by these Examples.

[Examples]

<Experimental Example 1>

[Example 1]

Crystal of histidine hydrochloride (manufactured by Ajinomoto Co., Inc.) was finely ground by a fine grinding machine (manufactured by Bepex) and continuously cast into a twin screw extruder (manufactured by Cosmotec Co., Ltd.) together with heat-melted soybean fully hydrogenated oil (manufactured by AGP) and soybean lecithin (manufactured by ADM) at the ratio shown in Table 1. Thereafter, the mixture was heated (preheating temperature: 65°C, main heating temperature: 85°C, set temperature for outlet: 70°C), melted and mixed in a cylinder to give a molten mixture in a molten slurry state. The obtained molten mixture was discharged from the outlet of the extruder, cast into a multi-hole shooter (number of holes: 2060, hole diameter: 2 mm), and the molten mixture was freely dropped from the hole of a multi-hole shooter into the water tank for cooling (water temperature: 5 - 15°C). The distance from the multi-hole shooter to the water surface of the water tank for cooling was 10 cm. The molten mixture that dropped from the multi-hole shooter became droplet during dropping, immersed in water, cooled and solidified instantaneously. The attached water was dehydrated by blowing at room temperature, and the solid was subjected to a heat-drying treatment by a fluidized-bed dryer (manufactured by Ajinomoto Co., Inc.) set to 52°C for 7 min to give granules. Then, using a roll mill (clearance between rolls: 2 mm), the granules were pulverized, sieve analyzed using a sieve with aperture 1 mm, and a feed additive composition for ruminants (hereinafter to be referred to as the composition of Example 1) was obtained on the sieve.

[Table 1]

| material | blending rate (wt%) | | | | |
|---|---|---|---|---|---|
| | Example 1 Comparative Example 1 Comparative Example 9 Comparative Example 10 Comparative Example 11 | Example 2 Comparative Example 2 | Example 3 Example 4 Comparative Example 3 | Example 5 Example 6 Comparative Example 4 | Comparative Example 5 Comparative Example 6 Comparative Example 7 Comparative Example 8 |
| (A) soybean fully hydrogenated oil | 38.7 | 24.3 | 38.5 | 46.5 | 43.8 |
| (B) soybean lecithin | 1.3 | 0.7 | 0.9 | 1.1 | 1.2 |
| (C) histidine hydrochloride | 60.0 | - | - | - | - |
| (C) vitamin $B_{12}$ (cyanocobalamin, excipient triturated powder, content 1%) | - | 75.0 | - | - | - |
| (C) niacin | - | - | 60.6 | - | - |

(continued)

| material | blending rate (wt%) | | | | |
|---|---|---|---|---|---|
| | Example 1 Comparative Example 1 Comparative Example 9 Comparative Example 10 Comparative Example 11 | Example 2 Comparative Example 2 | Example 3 Example 4 Comparative Example 3 | Example 5 Example 6 Comparative Example 4 | Comparative Example 5 Comparative Example 6 Comparative Example 7 Comparative Example 8 |
| (C) folic acid | - | - | - | 52.4 | - |
| (C) lysine hydrochloride | - | - | - | - | 55.0 |

[Comparative Example 1]

In the same manner as in Example 1 except that pulverization and sieve analysis of granules were not performed, a feed additive composition for ruminants having a particle size exceeding 2 mm (hereinafter to be referred to as the composition of Comparative Example 1) was obtained.

[Example 2]

Soybean fully hydrogenated oil (manufactured by Yokozeki Oil & Fat Industries Co., Ltd.) was melted by heating in a beaker, soybean lecithin (manufactured by ADM) and vitamin $B_{12}$ (cyanocobalamin) (manufactured by DSM) were cast under heating at the ratio shown in Table 1, and mixed to give a molten mixture in a molten slurry state. The obtained molten mixture was cast into a multi-hole shooter (number of holes: 108, hole diameter: 1 mm), and the molten mixture was freely dropped from the hole of a multi-hole shooter into the water tank for cooling (water temperature: 0 - 10°C). The distance from the multi-hole shooter to the water surface of the water tank for cooling was 10 cm. The molten mixture that dropped from the multi-hole shooter became droplet during dropping, immersed in water, cooled and solidified instantaneously. This was dehydrated and air dried at room temperature to give granules.

Then, using a coffee mill (manufactured by Iwatani Corporation, mill mixer IFM-650D), the granules were pulverized, sieve analyzed using a sieve with aperture 500 $\mu$m, and a feed additive composition for ruminants (hereinafter to be referred to as the composition of Example 2) was obtained from under the sieve.

[Comparative Example 2]

In the same manner as in Example 2 except that pulverization and sieve analysis of granules were not performed, a feed additive composition for ruminants having a particle size exceeding 2 mm (hereinafter to be referred to as the composition of Comparative Example 2) was obtained.

[Examples 3 and 4]

Niacin (manufactured by DSM) was finely ground by a fine grinding machine (manufactured by Retsch, ZM200) and mixed with soybean lecithin (manufactured by ADM) at the ratio shown in Table 1 by a cutter mill (manufactured by Retsch, GM300). The mixture was mixed with soybean fully hydrogenated oil (manufactured by Yokozeki Oil & Fat Industries Co., Ltd.) melted by heating in a vertical granulator (manufactured by FUKAE PAWTEC Corporation FSGS5JD) at the ratio shown in Table 1 to give a material mixture. A twin screw extruder for laboratory use (manufactured by THE JAPAN STEEL WORKS, LTD.) was heated (preheating temperature: 65°C, main heating temperature: 85°C, set temperature for outlet: 70°C), and the material mixture was charged in a feeder connected to a hopper of the extruder, the material mixture was continuously fed, and heated, melted and mixed in the cylinder to give a molten mixture in a molten slurry state. The obtained molten mixture was discharged from the outlet of the extruder, cast into a multi-hole shooter (number of holes: 108, hole diameter: 1 mm), and the molten mixture was freely dropped from the hole of a multi-hole shooter into the water tank for cooling (water temperature: 10°C). The distance from the multi-hole shooter to the water surface of the water tank for cooling was 10 cm. The molten mixture that dropped from the multi-hole shooter became droplet during dropping, immersed in water, cooled and solidified instantaneously. This was dehydrated by a centrifugal separator (manufactured by KOKUSAN Co. Ltd., H-110A) and subjected to a blow treatment with a fluidized-bed dryer (manufactured by Freund Corporation, FLO-mini) at room temperature for 10 min to give granules.

Then, using a disintegrator (manufactured by Hata Tekkosho co. ltd., HU-RG, 1 mm screen), the granules were pulverized, sieve analyzed using sieves with aperture 500 $\mu$m and 1 mm, and a feed additive composition for ruminants (hereinafter to be referred to as the composition of Example 3) was obtained on the sieve with aperture 1 mm. In addition, a feed additive composition for ruminants that passed aperture 1 mm and stayed on the sieve with aperture 500 $\mu$m (hereinafter to be referred to as the composition of Example 4) was obtained.

[Comparative Example 3]

In the same manner as in Examples 3 and 4 except that pulverization and sieve analysis of granules were not performed, a feed additive composition for ruminants having a particle size exceeding 2 mm (hereinafter to be referred to as the composition of Comparative Example 3) was obtained.

[Example 5 and 6]

In the same manner as in Example 2 except that folic acid (manufactured by DSM) was used at the ratio shown in Table 1 instead of vitamin $B_{12}$ (cyanocobalamin) and the diameter of the hole in the multi-hole shooter was changed from 1 mm to 2 mm, granules were obtained.

Then, using a coffee mill (manufactured by Iwatani Corporation, mill mixer IFM-650D), the granules were pulverized, sieve analyzed using sieves with aperture 500 $\mu$m and 1 mm, and a feed additive composition for ruminants (hereinafter to be referred to as the composition of Example 5) was obtained on the sieve with aperture 1 mm. In addition, a feed additive composition for ruminants that passed aperture 1 mm and stayed on the sieve with aperture 500 $\mu$m (hereinafter to be referred to as the composition of Example 6) was obtained.

[Comparative Example 4]

In the same manner as in Examples 5 and 6 except that pulverization and sieve analysis of granules were not performed, a feed additive composition for ruminants having a particle size exceeding 2 mm (hereinafter to be referred to as the composition of Comparative Example 4) was obtained.

[Comparative Example 5]

Crystal of lysine hydrochloride (manufactured by Ajinomoto Co., Inc.) was finely ground by a fine grinding machine (manufactured by Bepex) and continuously cast into a twin screw extruder (manufactured by Cosmotec Co., Ltd.) together with heat-melted soybean fully hydrogenated oil (manufactured by AGP) and soybean lecithin (manufactured by ADM) at the ratio shown in Table 1. Thereafter, the mixture was heated (preheating temperature: 65°C, main heating temperature: 85°C, set temperature for outlet: 70°C), melted and mixed in a cylinder to give a molten mixture in a molten slurry state. The obtained molten mixture was discharged from the outlet of the extruder, cast into a multi-hole shooter (number of holes: 2060, hole diameter: 2 mm), and the molten mixture was freely dropped from the hole of a multi-hole shooter into the water tank for cooling (water temperature: 5 - 15°C). The distance from the multi-hole shooter to the water surface of the water tank for cooling was 10 cm. The molten mixture that dropped from the multi-hole shooter became droplet during dropping, immersed in water, cooled and solidified instantaneously. This was collected, attached water was dehydrated by blowing at room temperature, and the solid was subjected to a heat-drying treatment by a fluidized-bed dryer (manufactured by Ajinomoto Co., Inc.) set to 52°C for 12 min to give a feed additive composition for ruminants having a particle size exceeding 2 mm (hereinafter to be referred to as the composition of Comparative Example 5) was obtained.

[Comparative Examples 6 - 8]

Using a disintegrator (manufactured by Hata Tekkosho co. ltd., HU-RG, 1 mm screen), the composition of Comparative Example 5 was pulverized, sieve analyzed using sieves with aperture 250 $\mu$m, 500 $\mu$m and 1 mm, and a feed additive composition for ruminants (hereinafter to be referred to as the composition of Comparative Example 6) was obtained on the sieve with aperture 1 mm. In addition, a feed additive composition for ruminants that passed aperture 1 mm and stayed on the sieve with aperture 500 $\mu$m (hereinafter to be referred to as the composition of Comparative Example 7) was obtained. Furthermore, a feed additive composition for ruminants that passed aperture 500 $\mu$m and stayed on the sieve with aperture 250 $\mu$m (hereinafter to be referred to as the composition of Comparative Example 8) was obtained.

The solubility of the biologically active substances (histidine hydrochloride, vitamin B$_{12}$, niacin, folic acid and lysine hydrochloride) used for producing the compositions of Examples 1 - 6 and Comparative Examples 1 - 8 in water (100 g) is shown in Table 2.

[Table 2]

| biologically active substance | histidine hydrochloride | vitamin B$_{12}$ | niacin | folic acid | lysine hydrochloride |
|---|---|---|---|---|---|
| water temperature (°C) | 20 | 20 | 25 | 20 | 20 |
| dissolved amount (g) | 16.8[a] | 1.3[b] | 1.67[b] | 0.01[c] | 63[a] |

a) amino acid standard 9th edition (Ajinomoto Co., Inc.)
b) SDS (DSM) of each substance
c) manual of Japan's Specifications and Standards for Food Additives 8th edition

The protection ratio and dissolution ratio of the compositions of Examples 1 - 6 and Comparative Examples 1 - 8 were each measured by the following procedures.

[measurement of protection ratio and dissolution ratio]

The concentration of the biologically active substance in the following test solutions was measured by liquid chromatography (manufactured by Waters). Lysine was measured using a biosensor (manufactured by Oji Scientific Instruments).

<measurement of concentration (concentration A) of biologically active substance for calculation of protection ratio>

Using a dissolution tester (manufactured by TOYAMA SANGYO CO., LTD.), a preparation sample (about 3 g) was placed in ultrapure water (produced using Milli Q (manufactured by Millipore)) (900 ml) heated to 39°C corresponding to the body temperature of dairy cattle, and the mixture was stirred at 100 rpm. At 20 hr from the start of stirring, 2 ml of the stirring test solution was collected for protection ratio measurement, and the concentration of the biologically active substance was measured (concentration A, unit: mg/dl).

<measurement of concentration (concentration B) of biologically active substance for calculation of dissolution ratio>

To the test solution immediately after collection of the above-mentioned sample for protection ratio measurement was added with stirring at 100 rpm an aqueous solution (8 ml) of a bile powder (manufactured by Wako Pure Chemical Industries, Ltd.) and pancreatin (manufactured by Wako Pure Chemical Industries, Ltd.) (concentration of bile powder and pancreatin is 23.4 g/100 ml for each) to give a small intestine-corresponding test solution. At 5 hr from the addition of the aqueous solution, 2 ml of the stirring test solution was collected for dissolution ratio measurement, and the concentration of the biologically active substance was measured (concentration B, unit: mg/dl).

<calculation of protection ratio and dissolution ratio of biologically active substance>

The protection ratio and dissolution ratio of biologically active substance were calculated by the following formulas.

```
protection ratio (%)={1-(concentration A[mg/dl]×9)/(preparation
sample weight [g]×1000×content of biologically active substance
in preparation sample [wt%]/100)}×100
```

```
dissolution ratio (%)={((concentration B[mg/dl]-concentration
A[mg/dl])×9)/(preparation sample weight [g]×1000×content of
biologically active substance in preparation sample
[wt%]/100)}×100
```

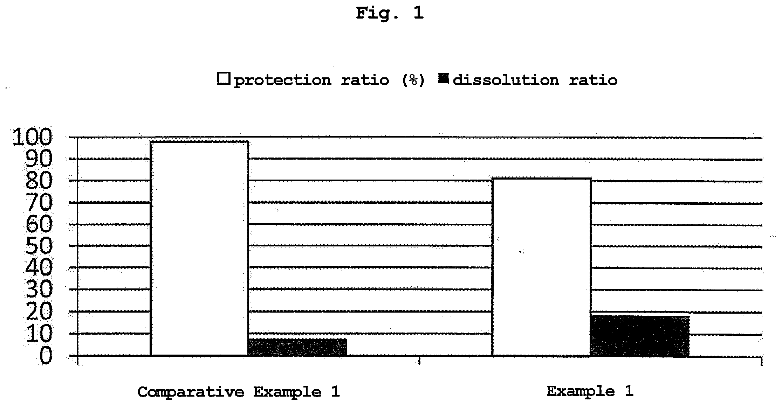

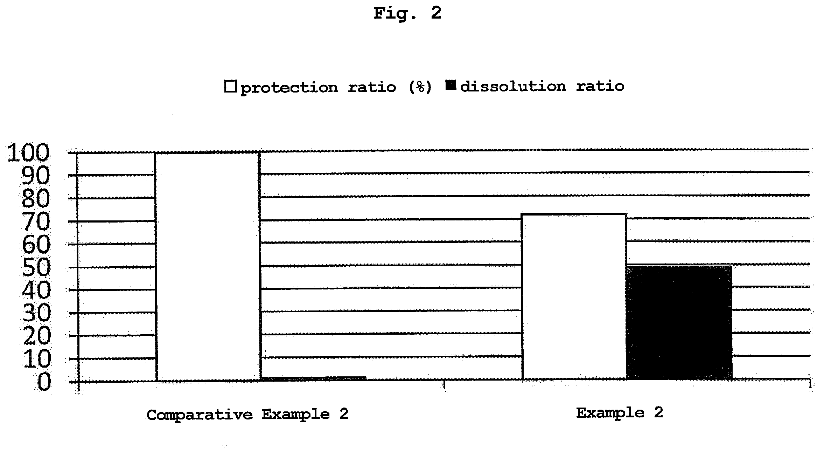

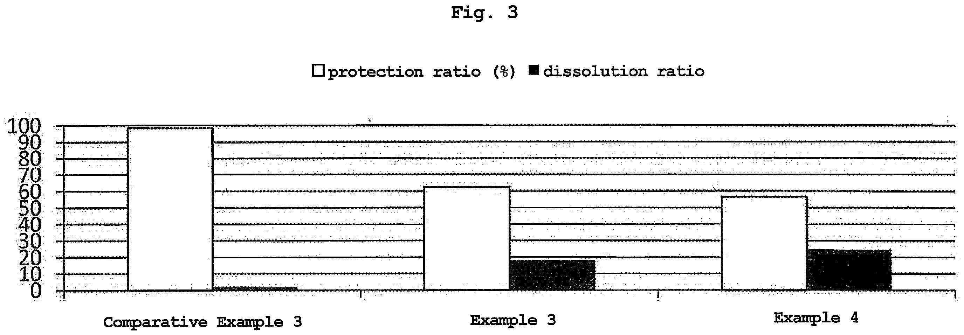

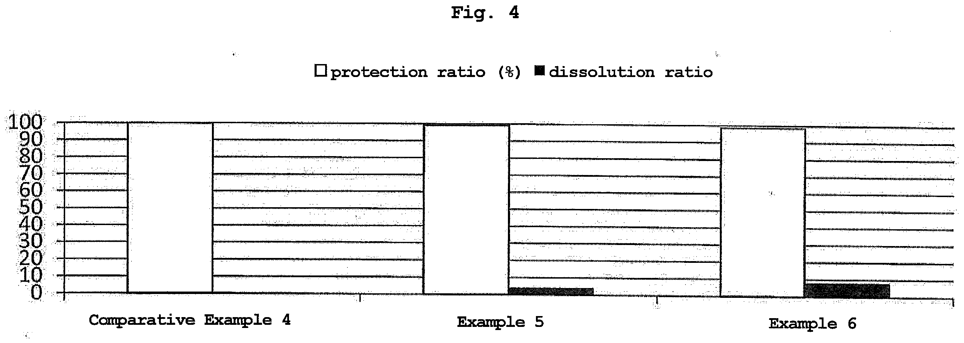

The results are shown in Figs. 1 - 5.

As is clear from the results shown in Figs. 1 - 4, feed additive compositions for ruminants containing biologically active substances having solubility of not less than 0.001 g and not more than 60 g in 100 g of water at 20°C (histidine hydrochloride, vitamin $B_{12}$, niacin, folic acid) showed improved dissolution ratios compared to those without pulverization (Comparative Examples 1 - 4) by setting the particle size to fall within the range of 0.5 - 2 mm by pulverization and sieve analysis (Examples 1 - 6).

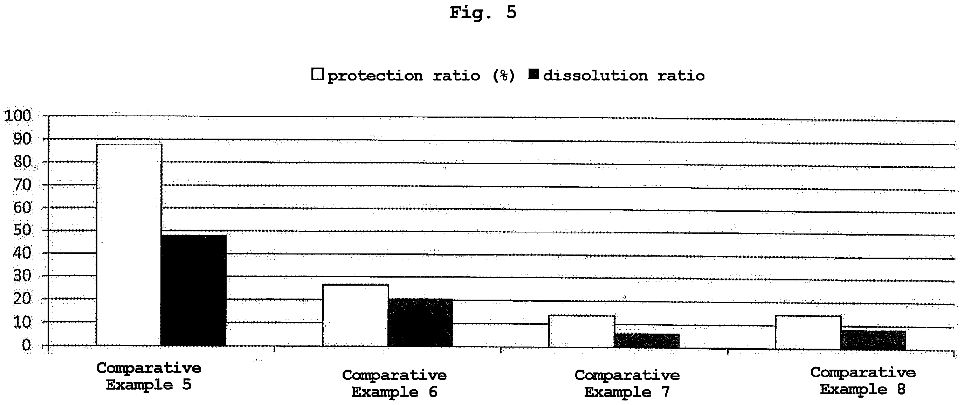

On the other hand, as is clear from the results shown in Fig. 5, feed additive compositions for ruminants containing a biologically active substance having solubility exceeding 60 g in 100 g of water at 20°C (lysine hydrochloride) showed markedly decreased protection ratios and decreased dissolution ratios compared to those without pulverization (Comparative Example 5) by setting the particle size to fall within the range of 0.5 - 2 mm by pulverization and sieve analysis (Comparative Examples 6 - 8).

<Experimental Example 2>

[Comparative Examples 9 - 11]

niacin (manufactured by DSM) finely ground by a fine grinding machine (manufactured by Retsch, ZM200) and soybean lecithin (manufactured by ADM) were mixed at the ratio shown in Table 1 by a high-speed mixer granulator (manufactured by FUKAE PAWTEC Corporation, FSGS5JD), soybean fully hydrogenated oil (manufactured by Yokozeki Oil & Fat Industries Co., Ltd.) melted by heating was added dropwise during the mixing, and the mixture containing niacin, soybean lecithin and soybean fully hydrogenated oil was solidified in the granulating machine to give granules. Then, the obtained granules were subjected to sieve analysis for each particle size by using sieves with aperture 500 μm, 1 mm and 2000 μm to give a feed additive composition for ruminants having a particle size exceeding 2 mm (hereinafter to be referred to as the composition of Comparative Example 9), a feed additive composition for ruminants having a particle size exceeding 1 mm and not more than 2 mm (hereinafter to be referred to as the composition of Comparative Example 10), and a feed additive composition for ruminants having a particle size exceeding 0.5 mm and not more than 1 mm (hereinafter to be referred to as the composition of Comparative Example 11).

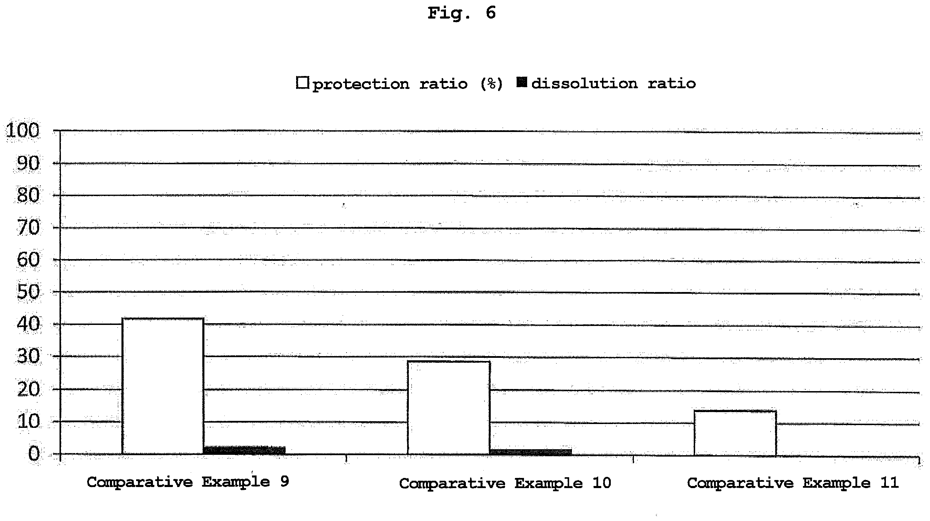

The protection ratio and dissolution ratio of the compositions of Comparative Examples 9 - 11 were respectively calculated by procedures similar to those in Experimental Example 1. The results are shown in Table 3 and Fig. 6. The protection ratio and dissolution ratio of the compositions of Example 3, 4 and Comparative Example 3, which were measured in Experimental Example 1, are also indicated in Table 3.

[Table 3]

|  | particle size (mm) | protection ratio (%) | dissolution ratio (%) |
|---|---|---|---|
| Comparative Example 3 | exceeding 2 mm | 99 | 2 |
| Example 3 | exceeding 1 mm and not more than 2 mm | 62 | 18 |
| Example 4 | exceeding 0.5 mm and not more than 1 mm | 56 | 24 |
| Comparative Example 9 | exceeding 2 mm | 42 | 2 |
| Comparative Example 10 | exceeding 1 mm and not more than 2 mm | 29 | 2 |
| Comparative Example 11 | exceeding 0.5 mm and not more than 1 mm | 14 | 0 |

As is clear from the results shown in Table 3, feed additive compositions for ruminants produced by a method including granulating in water showed improved dissolution ratios compared to that without pulverization (Comparative Example 3) by setting the particle size to fall within the range of 0.5 - 2 mm by pulverization and sieve analysis (Examples 3 and 4). In addition, a composition having a particle size of less than 0.5 mm tended to float on the surface of the aqueous solution at the time of analysis of the protection ratio and dissolution ratio.

On the other hand, feed additive compositions for ruminants produced by a method not including granulating in water did not show improved protection ratio or dissolution ratio compared to those by a method including granulating in water (Examples 3 and 4) even when the particle size was set to fall within the range of 0.5 - 2 mm by sieve analysis (Comparative Examples 9 and 10, 11).

[Industrial Applicability]

According to the present invention, a feed additive composition for ruminants, that is provided with high protection in rumen and is superior in dissolution in the lower gastrointestinal tract, and a production method thereof can be provided.

This application is based on a patent application No. 2016-157711 filed in Japan (filing date: August 10, 2016), the contents of which are incorporated in full herein.

**Claims**

1. A method for producing a feed additive composition for ruminants having a particle size of not less than 0.5 mm and not more than 2 mm, comprising granulating in water a molten mixture containing (A) at least one selected from hydrogenated vegetable oil and hydrogenated animal oil each having a melting point of higher than 50°C and lower than 90°C, (B) lecithin, and (C) a biologically active substance having solubility of not less than 0.001 g and not more than 60 g in 100 g of water at 20°C.

2. The production method according to claim 1, wherein the solubility of the biologically active substance in 100 g of water at 20°C is not less than 0.01 g and not more than 20 g.

3. The production method according to claim 1 or 2, wherein a content of the biologically active substance in the feed additive composition for ruminants is not less than 0.5 wt% and not more than 70 wt%.

4. The production method according to any one of claims 1 to 3, wherein a content of lecithin in the feed additive composition for ruminants is not less than 0.05 wt% and not more than 6 wt%.

5. The production method according to any one of claims 1 to 4, wherein the molten mixture is granulated in water by immersing the molten mixture in water.

6. The production method according to any one of claims 1 to 5, wherein the biologically active substance is at least one selected from the group consisting of amino acid and a salt thereof, and vitamin.

7. The production method according to any one of claims 1 to 6, comprising pulverizing the granule of the molten mixture.

8. A feed additive composition for ruminants having a particle size of not less than 0.5 mm and not more than 2 mm, and composed of an underwater granule comprising (A) at least one selected from hydrogenated vegetable oil and hydrogenated animal oil each having a melting point of higher than 50°C and lower than 90°C, (B) lecithin, and (C) a biologically active substance having solubility of not less than 0.001 g and not more than 60 g in 100 g of water at 20°C.

9. The composition according to claim 8, wherein the solubility of the biologically active substance in 100 g of water at 20°C is not less than 0.01 g and not more than 20 g.

10. The composition according to claim 8 or 9, wherein a content of the biologically active substance in the feed additive composition for ruminants is not less than 0.5 wt% and not more than 70 wt%.

11. The composition according to any one of claims 8 to 10, wherein a content of lecithin in the feed additive composition for ruminants is not less than 0.05 wt% and not more than 6 wt%.

12. The composition according to any one of claims 8 to 11, wherein the biologically active substance is at least one selected from the group consisting of amino acid and a salt thereof, and vitamin.

13. The composition according to any one of claims 8 to 12, wherein the aforementioned underwater granule is a pulverized product of the underwater granule.

Fig. 1

□protection ratio (%) ■dissolution ratio

Fig. 2

□protection ratio (%) ■dissolution ratio

Comparative Example 2                    Example 2

Fig. 3

☐protection ratio (%) ■dissolution ratio

## Fig. 4

□protection ratio (%)  ■dissolution ratio

Comparative Example 4          Example 5          Example 6

EP 3 498 104 A1

Fig. 5

☐protection ratio (%) ■dissolution ratio

## INTERNATIONAL SEARCH REPORT

| International application No. |
| --- |
| PCT/JP2017/028971 |

A. CLASSIFICATION OF SUBJECT MATTER
*A23K50/10*(2016.01)i, *A23K20/142*(2016.01)i, *A23K20/158*(2016.01)i,
*A23K20/174*(2016.01)i, *A23K40/10*(2016.01)i

According to International Patent Classification (IPC) or to both national classification and IPC

B. FIELDS SEARCHED

Minimum documentation searched (classification system followed by classification symbols)
A23K50/10, A23K20/142, A23K20/158, A23K20/174, A23K40/10

Documentation searched other than minimum documentation to the extent that such documents are included in the fields searched
    Jitsuyo Shinan Koho          1922-1996    Jitsuyo Shinan Toroku Koho    1996-2017
    Kokai Jitsuyo Shinan Koho    1971-2017    Toroku Jitsuyo Shinan Koho    1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | WO 2009/122750 A1 (Ajinomoto Co., Inc.), 08 October 2009 (08.10.2009), paragraphs [0009], [0023], [0033] & US 2011/0081444 A1 paragraphs [0013], [0059], [0077], [0078] & EP 2274989 A1          & CN 101980616 A | 1-13 |
| Y | JP 10-42795 A (Showa Sangyo Co., Ltd.), 17 February 1998 (17.02.1998), paragraphs [0016], [0023] (Family: none) | 1-13 |

☒  Further documents are listed in the continuation of Box C.          ☐  See patent family annex.

| | |
| --- | --- |
| * Special categories of cited documents:<br>"A"  document defining the general state of the art which is not considered    to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>    19 October 2017 (19.10.17) | Date of mailing of the international search report<br>    31 October 2017 (31.10.17) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2017/028971

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 9-172979 A  (Ajinomoto Co., Inc.), 08 July 1997 (08.07.1997), paragraphs [0050] to [0054] & US 5744178 A page 7, right column, line 49 to page 8, left column, line 37 & EP 781512 A2          & CN 1173293 A | 1-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 49045224 B
- JP 5040919 B
- JP 2016157711 A

**Non-patent literature cited in the description**

- **K. WATANABE et al.** *Animal Science Journal,* 2006, vol. 77, 495-502